# EUROPÄISCHE PATENTSCHRIFT

(11) **EP 2 298 629 B1**
(45) Veröffentlichungstag und Bekanntmachung des Hinweises auf die Patenterteilung: **17.10.2012**
(21) Anmeldenummer: 10008261.9
(22) Anmeldetag: 07.08.2010
(51) Int. Cl.: B62D 25/08, B62D 29/00

(54) **Querträger sowie Verfahren**
Cross-member and method
Traverse et procédé

(30) Priorität: 18.09.2009 DE 102009042174
(43) Veröffentlichungstag der Anmeldung: 23.03.2011
(73) Patentinhaber: Daimler AG, 70327 Stuttgart (DE)
(72) Erfinder: Rösch, Jochen, 71034 Böblingen (DE); Maier, Hans-Peter, .72202 Nagold (DE)
(74) Vertreter: JENSEN & SON

(56) Entgegenhaltungen:
- EP-A2- 1 314 614
- EP-A2- 1 627 800
- DE-A1-102004 038 893
- DE-A1-102005 039 469
- DE-A1-102005 055 705
- FR-A1- 2 840 573
- FR-A1- 2 898 855
- FR-A1- 2 911 573
- JP-A- 2007 203 777
- US-A1- 2004 160 088

## Beschreibung

Die Erfindung betrifft einen Querträger für ein vorderes Ende einer Karosserie eines Personenkraftwagens nach dem Oberbegriff von Patentanspruch 1, sowie ein Verfahren zum Herstellen eines Querträgers für ein vorderes Ende einer Karosserie eines Personenkraftwagens nach dem Oberbegriff von Patentanspruch 4.

Bei einem derartigen Querträger sind zur Realisierung eines Fußgängeraufprallschutzes eines Stoßfängers Abstützmaßnahmen erforderlich, sodass Kräfte im Falle eines Unfalls in den Querträger eingeleitet werden können. In der Regel erfordert dies zwei separate Bauteile, welche aufeinander baulich abgestimmt werden müssen. Hierbei sind Fügetechniken von Nöten, die einen gesteigerten Aufwand bei ihrer Herstellung und damit unerwünscht hohe Kosten mit sich bringen.

Die EP 1 065 108 A2 offenbart eine Struktur eines vorderen Bereichs einer Karosserie eines Personenkraftwagens, bei welcher mehrere Bauteile vorgesehen sind, die zur Realisierung eines Fußgängeraufprallschutzes dienen. Wie bereits angedeutet, umfasst diese Struktur eine hohe Anzahl an unterschiedlichen Bauteilen, woraus die bereits genannten Probleme und Nachteile resultieren.

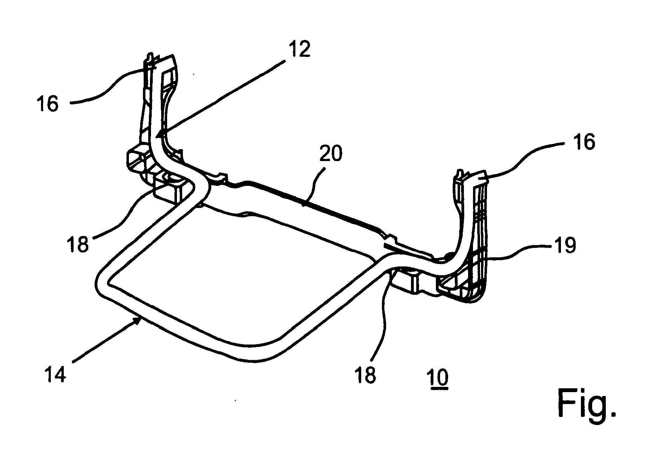

Des Weiteren zeigt die DE 10 2005 039 469 A1 ein Frontendmodul mit einem Montageträger, der einen oberen Querträger und einen unteren Querträger aufweist. Der untere Querträger liegt in etwa in der gleichen Ebene des oberen Querträgers. Das Profil des Querträgers ist nach Fig. 1 geradlinig ausgebildet. Am Querträger ist ein Fußgängerschutzträger mit Stützrippen nach hinten zur Abstützung am Querträger angeordnet.

In DE 10 2005 055 705 A1 ist ein Montageträger in Hybridbauweise offenbart, bei dem ein unterer Querträger, der einen U-förmigen vertikal gerichteten Verlauf aufweist und an Flanschplatten von Seitenträgern über Anwendung von Kunststoffspritzgießtechnik angebunden ist.

Schließlich beschreibt die US 200410160088 A1 ein Frontendmodul mit einem Rohrrahmen, der einen gebogenen U-förmigen Verlauf aufweist, wobei die U-Form vertikal ausgerichtet ist, welche die Motorkühleraufnahme eingrenzt. Der Rohrrahmen ist mittels Innenhochdruckumformen gestaltet und lässt einen gebogenen Verlauf erkennen.

Weiterhin ist aus der EP 1 314 614 A2 ein gattungsbildenden Querträger für ein vorderes Ende einer Karosserie eines Personenkraftwagens bekannt, der ein umgeformtes vohr logmises Trägerprofil und eine untere Abstützvorrichtung zur Abstützung eines Fußgängerschutzelements umfasst, die durch einen im Wesentlichen U-förmigen nach vorne abragenden Bereich des Trägerprofils gebildet ist. Einen ähnlichen Querträger zeigt auch die FR 2840 573 A1.

Es ist daher Aufgabe der vorliegenden Erfindung, einen Querträger der eingangs genannten Art sowie ein Verfahren zum Herstellen eines derartigen Querträgers derart weiterzuentwickeln, dass ein erhöhter Funktionserfüllungsumfang des Querträgers ermöglicht ist.

Diese Aufgabe wird durch einen Querträger mit den Merkmalen des Patentanspruchs 1 sowie durch ein Verfahren zum Herstellen eines Querträgers mit den Merkmalen des Patentanspruchs 4 gelöst. Vorteilhafte Ausgestaltungen mit zweckmäßigen und nichttrivialen Weiterbildungen der Erfindungen sind in den abhängigen Ansprüchen angeben.

Ein solcher Querträger für ein vorderes Ende einer Karosserie eines Personenkraftwagens umfasst ein ungeformtes Trägerprofil, welches mittels eines angespritzten Kunststoffs zumindest bereichsweise zu einem Hybridbauteil ergänzt ist, wobei erfindungsgemäß vorgesehen ist, dass der Querträger einen untere Abstützvorrichtung zur Abstützung eines Fußgängerschutzelements umfasst. Das Fußgängerschutzelement kann dabei im Bereich eines Stoßfänger oder eines beispielsweise Frontends abstützbar sein. Durch den erfindungsgemäßen Querträger ist somit ein Querträger geschaffen, welcher aufgrund seiner Hydridbauweise zum einen eine hohe Steifigkeit und Festigkeit und damit ein sehr gutes Unfallverhalten zum anderen aber gleichzeitig auch ein geringes Gewicht aufweist, wodurch ein Gesamtgewicht des Personenkraftwagens gering gehalten werden kann. Dies resultiert wiederum in einem geringeren Kraftstoffverbrauch einer Verbrennungskraftmaschine des Personenkraftwagens und damit in verringerten CO₂-Emissionen, was der Umwelt zu Gute kommt. Dadurch, dass dieser Querträger in Form eines Hybridbauteils zudem die untere Abstützvorrichtung zur Abstützung der Fußgängerschutzelements umfasst, ist der Funktionserfüllungsumfang dieses Querträgers gegenüber herkömmlichen Querträgern deutlich erweitert. Somit sind zusätzliche Bauteile vermeidbar, wodurch also die Teileanzahl reduzierbar ist. Diese Reduzierung der Teileanzahl birgt weiters den Vorteil, dass dadurch auch eine Kosten- und Gewichtersparnis ermöglicht ist. Die Abstützvorrichtung ist durch das Trägerprofil gebildet, womit eine weitere Reduzierung der Teileanzahl einhergeht, wodurch sich weiterhin Beschaffungskosten und Herstellungskosten reduzieren lassen. Die Abstützvorrichtung ist zudem durch einen im Wesentlichen U-förmigen nach vorne abragenden Bereich des Trägerprofils gebildet. Durch diese einstückige Ausführungsform der Abstützvorrichtung und des Trägerprofils sind eine weitere Reduzierung der Teileanzahl und damit eine weitere Reduzierung von Beschaffungs- und damit der Gesamtkosten für den erfindungsgemäßen Querträger realisiert.

Zur Verbesserung der in der Fahrzeugquerrichtung seitlichen Steifigkeit und damit zur Verbesserung eines Unfallverhaltens bei einem Seitenaufprall ist bei der Erfindung vorgesehen, dass im Bereich der Abstützeinrichtung ein die Schenkel des U-förmigen Bereichs des Trägerprofils überbrückender Kunststoffbereich vorgesehen ist. Mit dem diesen bildenden Kunststoff ist das Trägerprofil umspritzt. Somit Ist quasi die U-Form des Trägerprofils, welches vorteilhafter Weise aus einem Innenhochdruckumgeformten Rohr gebildet ist, mittels des Kunststoffs zu einem geschlossenen Umfangsprofil erweitert, wodurch die beschriebenen Vorteile erreicht werden. Dabei kann beispielsweise vorgesehen sein, dass der überbrückende Kunststoffbereich Einleger aufweist, die ihn zusätzlich stabilisieren.

Bei einer vorteilhaften Ausführungsform der Erfindung ist das Trägerprofil aus einem innenhochdruckumgeformten Rohr gebildet. Durch den Innenhochdruckumformprozess ist das Rohr mit einem bedarfsgerechten Querschnitt versehbar, wobei Eindrückungen und/oder Faltungen, beispielsweise in Folge einer Bearbeitung des Rohres durch Biegen, glättbar bzw. ausgleichbar sind. Darüber hinaus ist das Rohr konturgerecht mit einer hochpräzisen Reproduzierbarkeit an Umgebungsbedingungen, beispielsweise zum Anbringen an umgebende Rohbaustrukturen der Karosserie des Personenkraftwagens, und damit in seiner Bauraumgestaltung optimal anpassbar.

Die hohe Präzision des Innenhochdruckumformprozesses erlaubt weiterhin eine nahezu toleranzfreie hochpräzise Gestaltung des Rohrs, wodurch auch eine anschließende Montage des Rohrs bzw. des Querträgers vereinfacht und unkompliziert vonstattengehen kann. Dies bedeutet eine Reduzierung von Montagezeit und Montagekosten, was Gesamtkosten des Querträgers und damit der Karosserie des Personenkraftwagens zuträglich ist.

Des Weiteren sind durch diese einstückige Ausführungsform Fügeverbindungen wie beispielsweise Schweißverbindungen und/oder Schraubverbindungen vermeidbar, was zum einen zusätzliche Verbindungselemente wie etwa Schraubelemente obsolet werden lässt, wodurch die Gesamtkosten des Querträgers weiter absenkbar sind, zum anderen ist dadurch eine besonders optimale definierte Einleitung von äußeren Kräften im Falle eines Unfalles in die Abstützvorrichtung und weiter in eine umgehenden Rohrbaustruktur bzw. angrenzende Rohbaustruktur des Personenkraftwagens einleitbar, wodurch ein verbessertes Unfallverhalten des Querträgers realisiert ist.

Bei einer weiteren vorteilhaften Ausführungsform der Erfindung umfasst der Querträger wenigstens eine Aufnahme für ein Kühlermodul. Dadurch ist eine Weiterverbesserung einer funktionalen Leistungsfähigkeit durch Erhöhung einer Funktionsintegration erreicht. Dies bedeutet, dass die bisher beschriebenen Vorteile des Querträgers in Form eines Hybridbauteils mit den ebenfalls beschriebenen Vorteilen eines verbesserten Unfallverhaltens insbesondere bezüglich eines Fußgängerschutzes durch diese erfindungsgemäße Ausführungsform verknüpft sind mit einer weiteren Erhöhung des Funktionserfüllungsumfangs des Querträgers, nämlich dass der Querträger somit auch in der Lage ist, ein Kühlermodul aufzunehmen, ohne das weitere Elemente zur Aufnahme des Kühlermoduls wie beispielsweise Träger und/oder Verbindungselemente von Nöten sind. Diese Tatsache reduziert die Teileanzahl weiter, womit eine weitere Reduzierung der Beschaffungskosten und auch der Gesamtkosten des Querträgers einhergehen.

Darüber hinaus ist ein Handling gerade in der Montage des Querträgers reduziert, da eine geringere Teileanzahl transportiert bzw. verbaut werden muss. Zudem können zusätzliche Montageschritte entfallen, wodurch die Montagezeit und damit die Montagekosten reduzierbar sind, was ebenso den Gesamtkosten des Querträgers zuträglich ist.

Ist die Aufnahme durch den Kunststoff gebildet, so birgt dies den Vorteil, dass zum einen komplizierte Aufnahmegeometrien und/oder Positionen der Aufnahme mittels des Kunststoffs in unaufwendiger Weise realisierbar sind. Dadurch lassen sich gerade in einem bauraumkritischen Bereich wie einem Motorraum, in welchem in der Regel ein Kühlermodul aufzunehmen ist, mögliche Package-Probleme lösen. Des Weiteren bedeutet die Ausbildung der Aufnahme aus Kunststoff gerade gegenüber beispielsweise metallischen Aufnahmevorrichtungen eine Reduzierung des Gesamtgewichts des Querträgers, wodurch ein reduzierter Kraftstoffverbrauch der Verbrennungskraftmaschine und damit geringere CO₂-Emissionen erreicht sind.

Eine weitere Verbesserung des Unfallverhaltens des Querträgers lässt sich dadurch herbeiführen, dass bei einer vorteilhaften Ausführungsform der Erfindung das Trägerprofil beiderends im Wesentlichen in Fahrzeuglängsrichtung verlaufende Bereiche aufweist, die in Fahrzeuglängsrichtung nach hinten verlaufen. Dadurch ist eine Anbindung des Querträgers durch das Trägerprofil an Längsträger der Karosserie des Personenkraftwagens ermöglicht, wodurch gerade im Falle eines Unfalls eine Aufprallenergie effizient und direkt in eine Rohbaustruktur bzw. unfallrelevante Strukturen der Karosserie des Personenkraftwagens einleitbar und verteilbar ist. Dies bedeutet auf der einen Seite eine Verbesserung des Fußgängerschutzes, da wie beschrieben die Aufprallenergie definiert und schonend abgeleitet bzw. in die Karosserie des Personenkraftwagens eingeleitet werden kann, auf der anderen Seite geht damit auch eine Erhöhung einer Sicherheit für Insassen des Personenkraftwagens einher, da eben diese Aufprallenergie in unfallrelevante Strukturen, wie beispielsweise energieabsorbierende Elemente, einleitbar ist zum schonenden Abbau von Beschleunigungen in Folge eines Aufpralls des Personenkraftwagens. Dies bedeutet also eine Reduzierung einer Verletzungswahrscheinlichkeit und einer Verletzungsschwere sowohl für Fußgänger als auch für die Insassen des Personenkraftwagens ermöglicht ist.

Die in diesem Zusammenhang einstückige Ausbildung des Trägerprofils bedeutet zum einen eine Reduzierung der Teileanzahl und damit eine weitere Reduzierung der Beschaffungs-, Herstell- und Montagekosten des Querträgers, da zusätzliche Verbindungselemente wie beispielsweise Schraubelemente obsolet sind, zum anderen verbessert die einstückige Ausbildung einen Lastpfad zum Einleiten und Verteilen der Aufprallenergie in unfallrelevante Strukturen der Karosserie des Personenkraftwagens zur weiteren Verbesserung des Unfallverhaltens des Querträgers.

Bei einem erfindungsgemäßen Verfahren zum Herstellen eines Querträgers für ein vorderes Ende einer Karosserie eines Personenkraftwagens, bei welchem ein Trägerprofil umgeformt und mittels eines Kunststoffs zumindest bereichsweise zu einem Hybridbauteil unter Ausbildung eines Kunststoffbereichs umspritzt wird, ist vorgesehen, dass in den Querträger eine untere Abstützvorrichtung zur Abstützung eines Fußgängerschutzes integriert wird. Der Kunststoffbereich überbrückt im Bereich der Abstützvorrichtung die Schenkel des Trägerprofils und erweitert dessen U-Form zu einem geschlossenen Umfangsprofil. Dadurch wird ein Bauteil in Form des Querträgers geschaffen, welches, wie bereits in Zusammenhang mit dem erfindungsgemäßen Querträger beschrieben, ein sowohl steifes und festes als auch leichtes Bauteil darstellt, welches einen hohen Funktionserfüllungsumfang aufweist, insbesondere zur Realisierung eines Fußgängerschutzes zur Erhöhung der Sicherheit im Falle eines Unfalls des Personenkraftwagens mit einem Fußgänger. Das Fußgängerschutzelement kann dabei im Bereich eines Stoßfänger oder eines beispielsweise Frontends abstützbar sein. Zur Erreichung einer Abstützung mit optimaler Krafteinleitung bei geringen Herstellungsaufwand wird ein Rohr verwandt, welches zunächst U-förmig vorgebogen und dann in ein Innenhochdruckumformwerkzeug eingebracht wird, wobei Idealerweise im Innenhochdruckumformwerkzeug ebenfalls das Spritzgussverfahren durchgeführt wird. Dadurch ist ein zusätzlicher Herstellungsschritt in Form eines Herausnehmens des Trägerprofils aus dem Werkzeug und Verbringung desselbigen in ein anders Werkzeug eingespart, was mit einer Reduzierung der Herstellkosten und damit mit einer Reduzierung der Gesamtkosten des Querträgers bzw. des erfindungsgemäßen Verfahrens einhergeht.

Da die Abstützvorrichtung durch einen im Wesentlichen U-förmigen nach vorne abragenden Bereich des Trägerprofils gebildet wird, erbringt dies vorteilig, dass durch diese einstückige Ausbildung der Abstützvorrichtung und des Trägerprofils eine Teileanzahl reduziert ist, womit Beschaffungskosten und damit Gesamtkosten für ein derartiges Verfahren reduziert werden können. Zudem ist durch diese einstückige Ausbildung auch eine Einleitung und eine Verteilung einer Aufprallenergie im Falle eines Unfalls, insbesondere mit einem Fußgänger, in unfallrelevante Strukturen der Karosserie des Personenkraftwagens besonders effizient und definiert ermöglicht, wodurch ein Verletzungsschwere und eine Verletzungswahrscheinlichkeit des Fußgängers reduziert sind.

Aufgrund der Formung des Trägerprofils aus einem Rohr mittels Innenhochdruck wird ein praktisch toleranzfreies und hochpräzises Fertigen des Querträgers ermöglicht, was mit einem reduzierten Montageaufwand und dadurch mit reduzierten Montagekosten einhergeht. Bei einer vorteilhaften Ausführungsform des Verfahrens wird das Trägerprofil in einem ersten Bearbeitungsschritt durch Biegen und in einem anschließenden Bearbeitungsschritt durch Innenhochdruckumformen bearbeitet. Dadurch können Eindrückungen oder Faltungen die gegebenenfalls beim Biegen entstehen geglättet bzw. ausgeglichen werden, wodurch unerwünschte Verformungen und daraus resultierende unerwünschte Spannungsspitzen gerade im Falle eines Unfalls vermeidbar sind zur weiteren Verbesserung des Unfallverhaltens des Querträgers.

Eine Ausbildung zumindest einer Aufnahme für ein Kühlermodul bedeutet eine weitere Erhöhung eines Funktionserfüllungsumfangs des Querträgers bei gleichzeitiger Beibehaltung aller bisher sowohl im Zusammenhang mit dem erfindungsgemäßen Querträgers als auch in Zusammenhang mit dem erfindungsgemäßen Verfahren beschriebenen Vorteile.

Wird die Aufnahme mittels des Kunststoffs ausgebildet, so bedeutet dies eine Reduzierung einer Teileanzahl und damit einer Reduzierung von Kosten sowohl für das erfindungsgemäße Verfahren als auch von Gesamtkosten für einen derartigen Querträger, der mit einem erfindungsgemäßen Verfahren herstellt wird. Die Ausbildung der Aufnahme aus Kunststoff bedeutet weiterhin eine Vermeidung gewichtintensiverer, beispielsweise im Wesentlichen aus einem Metall gebildeter und gegebenenfalls zusätzlicher Aufnahmeelemente zur Anordnung eines Kühlermoduls am Querträger, was sowohl zusätzliche Kosten vermeidet als auch ein Gewicht des Querträgers und damit der Karosserie des Personenkraftwagens gering hält. Damit ist eine Reduzierung eines Kraftstoffverbrauchs einer Verbrennungskraftmaschine des Personenkraftwagens und damit eine Reduzierung von CO₂-Emissionen erreicht.

Bei einem besonders vorteilhaften Aspekt der Erfindung wird das Trägerprofil mittels eines Spritzgussverfahrens zumindest bereichsweise mit Kunststoff umspritzt. Dadurch sind, wie bereits im Zusammenhang mit dem erfindungsgemäßen Querträger erläutert, komplizierte Geometrien des Kunststoffs, insbesondere zumindest einer etwaig existierenden Aufnahme für ein Kühlermodul auf einfache und kostenunaufwendige Weise erreichbar, bei gleichzeitig hoher Präzision und geringer Toleranz aufgrund eines Einsatzes des Spritzgussverfahrens.

Dabei kann Idealerweise vorgesehen sein, dass im Innenhochdruckumformwerkzeug an das Trägerprofil in Form des Rohrs zumindest eine Kühleraufnahme und, wie im Zusammenhang mit dem erfindungsgemäßen Querträger beschrieben, beispielsweise weitere Versteifungselemente, so z. B. säulenartige Anbindungen an einen Längsträger angespritzt werden. Vorteilhafter Weise wird das Rohr während des Spritzgussverfahrens durch einen innenseitigen herrschenden Druck, insbesondere einen Fluiddruck, gegen das einen in gegengesetzter Richtung wirkenden Gießdruck abgestützt, sodass das Trägerprofil, insbesondere das Rohr, nicht kollabieren kann. Werden am Trägerprofil beide im Wesentlichen in Fahrzeuglängsrichtung verlaufende Bereiche ausgebildet, so ergibt sich dadurch eine optimale Anbringungsmöglichkeit des Querträgers an eine Längsträgerstruktur der Karosserie des Personenkraftwagens, wodurch ein definierter Kraftfluss im Falle eines Unfalls zur Erhöhung der Sicherheit sowohl für Fußgänger als auch für Insassen des Personenkraftwagens erreicht ist.

Das Endprodukt ist ein Hybridbauteil, welches hochfunktionell aufgrund des Spritzgussverfahrens und mit einer hohen Steifigkeit aufgrund der Verwendung eines Innenhochdruckumgeformten Rohrs ausgebildet ist. Zur Verstärkung der Anbindung an Längsträger kann vorgesehen sein, das Innenhochdruckumgeformte Rohr so zu biegen, dass es einem gewünschten Strukturverlauf folgt.

Durch den erfindungsgemäßen Querträger und das erfindungsgemäßen Verfahren wird ein einteiliges Bauteil geschaffen, für dessen Herstellung, auf anschließende Fügeverfahren die gegebenenfalls einen Verzug herbeiführen würden verzichtet werden kann, wodurch eine Montage vereinfacht und damit Montagekosten reduziert sind bei gleichzeitiger Erhöhung des Funktionserfüllungsumfangs des Querträgers.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehenden in der Beschreibung genannten Merkmale und Merkmalskombinationen sowie die in der nachfolgenden in der Figurenbeschreibung genannten und/oder in der Figur alleine gezeigten Merkmale und Merkmalskombinationen nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Figur: eine perspektivische Ansicht eines Querträgers für ein vorderes Ende einer Karosserie eines Personenkraftwagens mit einem umgeformten Trägerprofil, welches mittels eines Kunststoffs zumindest bereichsweise zu einem Hybridbauteil ergänzt ist, wobei der Querträger eine unter Abstützvorrichtung zur Abstützung eines Fußgängerschutzelements umfasst.

Die Figur zeigt einen Querträger 10 für ein vorderes Ende einer Karosserie eines Personenkraftwagens, welcher ein Innenhochdruckumgeformtes Rohr 12 umfasst. Des Weiteren umfasst der Querträger 10 eine untere Abstützvorrichtung 14 zur Abstützung eines Fußgängerschutzelements insbesondere im Bereich eines Stoßfängers bzw. eines Frontends eines Personenkraftwagens. Die Abstützvorrichtung 14 ist dabei durch das Innenhochdruckumgeformte Rohr 12 und genauer durch einen U-förmigen Bereich des Innenhochdruckumgeformten Rohrs 12 gebildet. Die daraus resultierende Einstückigkeit des Innenhochdruckumgeformten Rohrs 12 und der Abstützvorrichtung 14 ermöglicht eine besonders günstige und effiziente Einleitung einer Aufprallenergie im Falle eines Unfalls an den Querträger 10 angrenzende, unfallrelevante Strukturen der Karosserie des Personenkraftwagens.

Zur weiteren Verbesserung dieser Einleitung und Verteilung der Aufprallenergie im Falle eines Unfalls weist das Innenhochdruckumgeformte Rohr 12 beiderends im Wesentlichen in Fahrtlängsrichtung nach hinten verlaufende Bereiche 16 auf, mittels derer das Innenhochdruckumgeformte Rohr 12 bzw. der Querträger10 an Längsträger der Karosserie des Personenkraftwagens anbindbar ist. Wie in der Figur zu sehen ist, sind die Bereiche 16, die Abstützvorrichtung 14 und das Innenhochdruckumgeformte Rohr 12 einstückig ausgebildet, wodurch eine optimale Einleitung und Verteilung der Aufprallenergie im Falle eines Unfalls in unfallrelevante Strukturen der Karosserie des Personenkraftwagens ermöglicht ist.

Wie weiterhin in der Figur zu sehen ist, ist im Bereich der Abstützvorrichtung 14 ein die Schenkel des U-förmigen Bereichs des Innenhochdruckumgeformten Rohrs 12 überbrückender Kunststoffbereich 20 vorgesehen, der eine Steifigkeit des Querträgers 10 in Fahrzeugquerrichtung erhöht, wodurch ein Unfallverhalten des Querträgers 10 bei einem seitlichen Unfall des Personenkraftwagens mit einem derartigen Querträger 10 verbessert ist. In dem Kunststoffbereich 20 können dabei Einleger vorgesehen sein zur weiteren Erhöhung der Steifigkeit, wobei diese Einleger beispielsweise aus einem Metall wie Aluminium oder Stahl oder aus einem härteren Kunststoff gebildet sein können.

Des Weiteren ist wie in der Figur zu sehen, das Innenhochdruckumgeformte Rohr 12 auch an den Bereichen 16 mittels eines Kunststoffs umspritzt ist zur weiteren Erhöhung der Steifigkeit des Querträgers 10. Des Weiteren bildet der Kunststoff dort gleichzeitig Anbindungsstrukturen an die angrenzende Rohbaustruktur aus.

Darüber hinaus sind Aufnahmen 18 für ein Kühlermodul mittels des Kunststoffs 19 ausgebildet, wodurch ein Funktionserfüllungsumfang des Querträgers 10 weiter erhöht ist.

Die Aufnahmen 18, der Kunststoffbereich 20 sowie die Umspritzungen der Bereiche 16 werden in verfahrenstechnisch einfacher Weise im gleichen Arbeitsgang hergestellt, wobei sie miteinander einstückig verbunden sind. Durch die einstückige Verbindung wird der Halt des Kunststoffs am Rohr 12 auch gegenüber höherer mechanischer Beanspruchung wie in Crash-Situationen erheblich verbessert. Natürlich ist auch alternativ eine getrennte Ausbildung der einzelnen Kunststoffstrukturen, also der Aufnahmen 18, der Kunststoffbereich 20 und die Umspritzungen der Bereiche 16, denkbar.

Der Querträger 10 ist somit ein steifes, festes aber gleichzeitig leichtes Bauteil mit einem sehr guten Unfallverhalten sowohl für Insassen des Personenkraftwagens als auch für Fußgänger, welches insbesondere aufgrund der Ausbildung der Aufnahmen für ein Kühlermodul einen erhöhten Funktionserfüllungsumfang aufweist. Der so geschaffene Querträger 10 in Form eines Kühlerträgers in Innenhochdruckumform-Hydridbauweise mit integrierter Abstützung für einen Fußgängerschutz (lower stiffener) ist aufgrund eines Einsatzes eines Innenhochdruckumformprozesses und eines Spritzgussverfahrens zur Umspritzung des Innenhochdruckumgeformten Rohrs 12 mittels des Kunststoffs 19 ein praktisch toleranzfreies, hochpräzises Bauteil, was eine unaufwendige und einfachere Montage ermöglicht, womit eine Reduzierung von Montagekosten und eine Reduzierung von Gesamtkosten des Querträgers 10 einhergehen.

## Patentansprüche

1. Querträger (10) für ein vorderes Ende einer Karosserie eines Personenkraftwagens, mit einem umgeformten rohrförmigen Trägerprofil (12) und einer unteren Abstützvorrichtung (14) zur Abstützung eines Fußgängerschutzelements, die durch einen im Wesentlichen U-förmigen nach vorne abragenden Bereich des Trägerprofils (12) gebildet ist,
**dadurch gekennzeichnet, dass**
der Querträger (10) einen Kunststoffbereich (20) aufweist, der im Bereich der Abstützvorrichtung (14) die Schenkel des Trägerprofils (12) überbrückt und dessen U-Form zu einem geschlossenen Umfangsprofil erweitert, wobei das Trägerprofil (12) mittels eines den Kunststoffbereich (20) bildenden **Kunststoffs (19) umspritzt ist, der mit dem Trägerprofil (12) ein Hybridbauteil (10) bildet.**

2. Querträger (10) nach Anspruch 1,
**dadurch gekennzeichnet, dass**
der Querträger (10) wenigstens eine Aufnahme (18) für ein Kühlermodul umfasst, die vorzugsweise durch den Kunststoff (19) gebildet ist.

3. Querträger (10) nach einem der vorhergehenden Ansprüche,
**dadurch gekennzeichnet, dass**
das vorzugsweise einstückige Trägerprofil (12) beiderends im Wesentlichen in Fahrzeuglängsrichtung verlaufende Bereiche (16) aufweist.

4. Verfahren zum Herstellen eines Querträgers (10) für ein vorderes Ende einer Karosserie eines Personenkraftwagens, bei welchem in den Querträger (10) eine untere Abstützvorrichtung (14) zur Abstützung eines Fußgängerschutzelements integriert wird, die durch einen im Wesentlichen U-förmigen nach vorne abragenden Bereich des Trägerprofils (12) gebildet wird,
**dadurch gekennzeichnet, dass**
das aus einem Rohr bestehende Trägerprofil (12) in einem ersten Bearbeitungsschritt vorgebogen, dann mittels Innenhochdruck geformt wird und mittels eines Kunststoffs (19) zumindest bereichsweise zu einem Hybridbauteil (10) **unter Ausbildung eines Kunststoffbereichs (20) umspritzt wird, der im Bereich der Abstützvorrichtung (14) die Schenkel des Trägerprofils (12) überbrückt und dessen U-Form zu einem geschlossenen Umfangsprofil erweitert.**

5. Verfahren nach Anspruch 4,
**dadurch gekennzeichnet, dass**
das Spritzgussverfahren im selben Werkzeug wie der Innenhochdruckumformprozess durchgeführt wird.

## Claims

1. Crossmember (10) for a front end of a body of a passenger car, comprising a shaped tubular member profile (12) and a lower supporting device (14) for the support of a pedestrian protection element, the supporting device (14) being represented by a substantially U-shaped forward-projecting section of the member profile (12),
**characterised in that**
the crossmember (10) has a plastic region (20) which bridges the legs of the member profile (12) in the region of the supporting device (14) and extends its U-shape to form a closed circumferential profile, wherein the member profile (12) is coated in an injection moulding process with a plastic material (19) forming the plastic region (20), forming a hybrid component (10) with the member profile (12).

2. Crossmember (10) according to claim 1,
**characterised in that**
the crossmember (10) comprises at least one receptacle (18) for a cooler module, which is preferably represented by the plastic material (19).

3. Crossmember (10) according to any of the preceding claims,
**characterised in that**
the preferably single-piece member profile (12) has at both ends regions (16) which substantially extend in the longitudinal direction of the vehicle.

4. Method for producing a crossmember (10) for a front end of a body of a passenger car, wherein a lower supporting device (14) for the support of a pedestrian protection element is integrated into the crossmember (10), the supporting device (14) being represented by a substantially U-shaped forward-projecting section of the member profile (12),
**characterised in that**
the tubular member profile (12) is pre-bent in a first processing step, then shaped by hydroforming and coated in at least some sections in an injection moulding process with a plastic material (19), thereby producing a hybrid component (10) while forming a plastic region (20) which bridges the legs of the member profile (12) in the region of the supporting device (14) and extends its U-shape to form a closed circumferential profile.

5. Method according to claim 4,
**characterised in that**
the injection moulding process is carried out in the same tool as the hydroforming process.

## Revendications

1. Entretoise transversale (10) pour une extrémité avant d'une carrosserie d'un véhicule automobile, comprenant un profilé de support (12) en forme de tube moulé et un dispositif d'appui (14) inférieur pour soutenir un élément de protection de piéton qui est formé par une région dépassant vers l'avant essentiellement en forme de U du profilé de support (12), **caractérisé en ce que** l'entretoise transversale (10) présente une zone (20) en matière plastique qui dans la région du dispositif de soutien (14) compense l'épaulement du profilé de support (12) et élargit la forme en U en un profilé circonférentiel fermé, le profilé de support (12) étant recouvert par extrusion d'une matière plastique (19) formant la région en plastique (20) laquelle forme avec le profilé de support (12) un élément de construction hybride (10).

2. Entretoise transversale (10) selon la revendication 1, **caractérisée en ce que** l'entretoise transversale (10) comprend au moins un logement (18) pour un module de refroidissement qui est formé de préférence par la matière plastique (19).

3. Entretoise transversale (10) selon l'une quelconque des revendications précédentes, **caractérisée en ce que** le profilé de support (12) de préférence d'un seul tenant de chaque extrémité présente des zones (16) s'étendant essentiellement dans la direction longitudinale du véhicule.

4. Procédé de fabrication d'une entretoise transversale (10) pour une extrémité avant d'une carrosserie d'un véhicule automobile, dans l'entretoise transversale (10) étant intégré un dispositif d'appui (14) inférieur pour soutenir un élément de protection de piéton qui est formé par une région dépassant vers l'avant essentiellement en forme de U du profilé de support (12), **caractérisé en ce que** le profilé de support (12) composé d'un tube est précintré au cours d'une première étape de traitement, est ensuite moulé au moyen de haute pression intérieure et recouvert par extrusion d'une matière plastique (19) au moins partiellement en un élément de construction hybride (10) en formant une zone en plastique (20) qui compense dans la région du dispositif de soutien (14) l'épaulement du profilé de support (12) et dont la forme en U est élargie à un profilé circonférentiel fermé.

5. Procédé selon la revendication 4, **caractérisé en ce que** le procédé de moulage par injection est réalisé dans le même outil que le processus de formage sous pression interne élevée.
